# EUROPÄISCHE PATENTSCHRIFT

(11) **EP 2 874 350 B1**
(45) Veröffentlichungstag und Bekanntmachung des Hinweises auf die Patenterteilung: **08.08.2018**
(21) Anmeldenummer: 13192685.9
(22) Anmeldetag: 13.11.2013
(51) Int. Cl.: H04L 12/24, G06F 9/50, H04L 12/28, H04W 64/00, H04L 12/911, H04L 29/08, H04L 12/12, H04L 12/64, H04W 16/04

(54) **DYNAMISCHE ZUTEILUNG UND VIRTUALISIERUNG VON NETZRESSOURCEN IM ZUGANGSNETZ UND IN KUNDENNETZEN**
DYNAMIC ALLOCATION AND VIRTUALISATION OF NETWORK RESOURCES IN THE ACCESS NETWORK AND IN CUSTOMER NETWORKS
AFFECTATION ET VIRTUALISATION DYNAMIQUE DE RESSOURCES RÉSEAU DANS LE RÉSEAU D'ACCÈS ET DANS LES RÉSEAUX CLIENTS

(43) Veröffentlichungstag der Anmeldung: 20.05.2015
(73) Patentinhaber: Deutsche Telekom AG, 53113 Bonn (DE)
(72) Erfinder: Lange, Christoph, 10318 Berlin (DE); Kosiankowski, Dirk, 15732 Eichwalde (DE)
(74) Vertreter: Vossius & Partner Patentanwälte Rechtsanwälte mbB

(56) Entgegenhaltungen:
- EP-A1- 2 562 959
- EP-A1- 2 563 075
- LANGE CHRISTOPH ET AL: "Improving the Energy Efficiency of Telecommunication Networks", PROCEEDINGS OF SPIE, S P I E - INTERNATIONAL SOCIETY FOR OPTICAL ENGINEERING, US , Bd. 8065 28. März 2011 (2011-03-28), Seiten 806516-1, XP002670173, ISSN: 0277-786X, DOI: 10.1117/12.887988 Gefunden im Internet: URL:http://spiedigitallibrary.org/proceedi ngs/resource/2/psisdg/8065/1/806516_1 [gefunden am 2012-02-23]

## Beschreibung

Die vorliegende Erfindung bezieht sich allgemein auf das Gebiet der Telekommunikation. Insbesondere betrifft die Erfindung die Realisierung von hybriden (Festnetz- und Funk-) Anschlüssen unter Verwendung von Komponenten des leitungsgebundenen und des Funkzugangsnetzes und zugehörige Steuerungen.

Telekommunikationsnetze bestehen üblicherweise aus Abschnitten des Breitbandfestnetzes und des Mobilfunknetzes. Breitbandfestnetze bestehen beispielsweise aus Zugangsnetz, Aggregations- und Kernnetz sowie zugehörigen optischen Transportnetzen für das Aggregations- und Kernnetz. Mobilfunknetze wiederum bestehen aus Mobilfunkzugangs- und -kernnetzabschnitten.

Das Festnetz stellt über leitungsgebundene Zugänge den Anschluss von Kundenlokationen bereit, während das Mobilfunknetz über mobile Funkzugangslösungen den Telekommunikationsnetzzugang sicherstellt. Diese beiden Arten von Netzen sind historisch weitgehend getrennt gewachsen, was sich auch heute noch in oft parallelen Strukturen widerspiegelt. Gleichzeitig dienen beide Arten des Kundenanschlusses unterschiedlichen Zwecken (z. B. Anschluss eines ortsfesten Gebäudes durch das Festnetz und Sicherstellung der Erreichbarkeit eines mobilen Kunden durch das Mobilfunknetz), so dass Kunden neben einem Festnetzanschluss oftmals zusätzlich über einen Mobilfunkanschluss verfügen.

In Telekommunikationsnetzen ist derzeit der Trend hin zu konvergenten Netzen zu beobachten, also ein Zusammenwachsen von Fest- und Mobilfunknetzstrukturen. Dies geht hin bis zu hybriden Anschlüssen, die einem Kunden ein Breitbandprodukt bereitstellen in der Art und Weise, dass Teile der Gesamtbitrate über den Festnetzanschluss und Teile über den Mobilfunkanschluss übertragen und bereitgestellt werden.

Anschlüsse von Kunden bzw. deren Kundennetzen werden im Festnetz typischerweise anschluss- bzw. portorientiert geschaltet, d.h., der einem Kunden zugeordnete DSLAM-Port für einen DSL-Anschluss (digital subscriber line, DSLAM: DSL access multiplexer) oder auch für einen Telefonanschluss (DIV-Port, Port einer digitalen Vermittlungsstelle) wird mit der Kundenzugangsleitung fest verdrahtet. Dann ist dieser Port ausschließlich durch diesen einen Kunden nutzbar, auch wenn er über kürzere oder längere Zeiträume (z. B. nachts oder während einer längeren Abwesenheit, z. B. in Urlaubswochen) tatsächlich gar nicht genutzt wird. So wird Netzkapazität auf Seiten des Betreibers blockiert, die einerseits Kosten beim Aufbau des Netzes verursacht (capital expenditures CapEx) und auch während des Betriebes (operational expenditures, OpEx), z. B. durch Energieverbrauch und Wartung. Zudem werden, je nach Realisierung, ggf. fest zugewiesene IP-Adressen (Internet Protocol) blockiert, sofern sie statisch vergeben werden. Sinngemäß werden ebenso Mobilfunkgeräte, sofern sie im Netz eingebucht und registriert sind, dauerhaft Netzressourcen benötigen - hier natürlich nicht einen "fest verdrahteten" Port, jedoch IP-Adressen, Kapazität einer Mobilfunkzelle usw. Das sich an der Kundenlokation befindende Kundennetz wird entsprechend dem Stand der Technik unabhängig vom Betreibemetz betrieben und gesteuert und so oftmals dauerhaft im Betrieb belassen - entsprechend des "Always-On/Always-Connected"-Paradigmas.

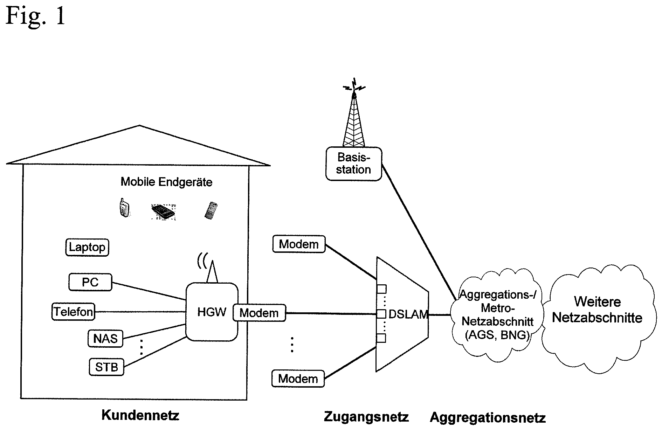

Dieses aus dem Stand der Technik bekannte Grundprinzip ist in Fig. 1 dargestellt: Es ist ein Anschluss für einen Privatkunden dargestellt, der über ein Heimnetz verfügt und über eine DSL-Leitung an das Telekommunikationsnetz seines Netzproviders angeschlossen ist und somit einen Zugang zum Internet geschaltet bekommt. Durch diesen Anschluss wird ein DSLAM-Port dauerhaft belegt - unabhängig von der tatsächlichen Nutzung. Das Heimnetz besteht aus einem Home Gateway (HGW) als Zentralknoten, an den verschiedene Heimnetzgeräte und -komponenten leitungsgebunden oder über WLAN angeschlossen sind, hier z. B. ein PC, ein Laptop, ein oder mehrere Telefone, ein NAS-Speicher (Network Attached Storage) sowie eine Set-Top-Box (STB) zum Empfang von digitalen Fernsehsignalen über den Breitbandanschluss. Außerdem verfügen die zu diesem Haushalt gehörenden Personen über im Allgemeinen mehrere Mobilfunktelefone, die ebenfalls Teil dieser Darstellung sind und über die Mobilfunkbasisstation an das Netz angebunden sind. Derzeit werden sowohl DSLAM als auch Mobilfunkbasisstationen an Switche bzw. Router (Aggregationsswitch (AGS) oder Border Network Gateway (BNG)), der nächsten Netzebene (Aggregations-/Metronetze), angebunden. Die sich in Fig. 1 anschließende Wolke "weitere Netzabschnitte" soll stellvertretend für zusätzliche Netzbereiche stehen, die die Konnektivität des Kunden zum nächstgelegenen Internetzugangsknoten (PoP: Point of Presence) sicherstellen.

In der EP 2 563 075 A1 wird ein Verfahren und eine Vorrichtung zur lastadaptiven, übergreifenden Steuerung von Betriebszuständen in konvergenten Fest- und Mobilfunknetzen offenbart, wobei durch das Verfahren bit-rate- und Leistungszustände von Komponenten eines Netzwerkes gesteuert werden, wobei das Netzwerk ein Mobilfunknetz und Aggregationsnetz umfasst, die miteinander verbunden sind.

Die Anordnung der Netzkomponenten und ihre Funktionsweise im Zusammenwirken entsprechend dem Stand der Technik bedingt, dass Netzressourcen im Netz des Anbieters, wie z. B. Ports am DSLAM für das Breitbandzugangsnetz oder in der DIV (Digitale Vermittlungsstelle) für das Telefonnetz statisch vergeben und fest verdrahtet werden. Dadurch ist es notwendig, entsprechend viele Zugangsports im Netz zu installieren, auch wenn diese nicht dauerhaft benötigt werden. Dieses verursacht Investitionskosten und später im Betrieb Betriebskosten (für z. B. Wartung und Energieverbrauch).

Es ist daher eine Aufgabe der vorliegenden Erfindung, eine Lösung bereit zu stellen, mit der durch optimierten Ausbau und Betrieb Investitions- und Betriebskosten verringern werden können. Insbesondere soll durch die vorliegende Erfindung eine Möglichkeit bereitgestellt werden, Netzressourcen auf der Basis eines hybriden Fest- und Mobilfunkanschlusses und den damit verknüpften Nutzer- und Nutzungsinformationen dynamisch zuzuteilen und so Netzkapazität kosteneffizient zu nutzen, Betreibernetze entsprechend kosten- und energieeffizient zu gestalten und Kundennetze und deren Komponenten zu steuern, um hier eine erhöhte Energieeffizienz zu erzielen. Die Dienste, die der Kunde nutzt, sollen durch diese dynamische Ressourcenzuordnung nicht beeinträchtigt werden.

Zudem werden Komponenten des in Verantwortung des Kunden stehenden und betriebenen Kundennetzes (hier z. B. Heimnetz) oftmals dauerhaft oder zumindest länger als benötigt betrieben (z. B. durch "Vergessen" des Ausschaltens von Geräten oder Bequemlichkeit), so dass hier ein Einsparpotenzial beim Energieverbrauch des Kunden und bei den entsprechenden Energiekosten identifiziert werden kann. Eine entsprechende Steuerung gemäß vorliegender Erfindung soll helfen, auf Kundenseite den Energieverbrauch des Heimnetzes und die dadurch verursachten Energiekosten zu verringern.

Weiterhin soll durch die Erfindung eine kontinuierliche Bereitstellung von ausgewählten Diensten ermöglicht werden. Auch wenn der Nutzer nicht zu Hause ist und über die Heimnetzendgeräte verfügen kann, sollen diese Dienste weiterhin adäquat nutzbar bleiben, und so eine Verbesserung des Dienstangebots erreicht werden.

Durch die Erfindung werden ein Verfahren und ein System zur dynamischen Zuteilung von Netzressourcen im Zugangsnetz und in mindestens einem Kundennetz bereitgestellt. Nach dem erfindungsgemäßen Verfahren werden zunächst die Positionen aller Nutzer des Kundennetzes festgestellt. Wird festgestellt, dass kein Nutzer des Kundennetzes in dem Kundennetz angemeldet ist, wird das Kundennetz bzw. mindestens eine seiner Komponenten in einen ersten vordefinierten Zustand versetzt. Beispielsweise können alle Komponenten des Kundennetzes in einen Standby- bzw. Sleep-Modus versetzt werden. In diesem Fall wird weiterhin mindestens ein Zugangsport eines dem Kundennetz zugeordneten Zugangsmultiplexers an den Zugangsnetzressourcenpool freigegeben, insbesondere ein DSLAM-Port. Hier ist zu beachten, dass der Zugangsmultiplexer in der Regel ein Element des (betreiberseitigen) Zugangsnetzes ist.

Vorzugsweise wird, falls festgestellt wird, dass mindestens ein Nutzer in der Reichweite des Kundennetzes ist, mindestens ein Zugangsport dem Kundennetz zugeordnet und das Kundennetz bzw. mindestens eine seiner Komponenten in einen zweiten vordefinierten Zustand versetzt. So können beispielsweise einige Geräte des Kundennetzes in einen aktiven Betriebsmodus versetzt werden, während andere im Standby- bzw. Sleep-Modus verbleiben können.

Weiterhin kann mindestens eine voreingestellte eingehende oder ausgehende Kommunikationsanforderung und/oder mindestens eine Dienstanforderung eines Nutzers des Kundennetzes auf ein mobiles Kommunikationsgerät des Nutzers umgeleitet werden, falls der Nutzer nicht in dem mindestens einen Kundennetz angemeldet ist. Die Kommunikations-/Dienstanforderung kann auch auf eine virtuelle Instanz umgestellt werden, beispielsweise durch Bereitstellen des angeforderten Dienstes als Software-basierte Lösung aus einem Rechenzentrum.

Ein freigegebener Zugangsport soll vorzugsweise einem weiteren Kundennetz zugeordnet werden. Dies sollten allerdings ein solches Netz sein, in dem momentan eine Kundennetznutzung durch Feststellung mindestens eines Nutzers in dem Kundennetz detektiert wird und das daher eine Verbindung zum Betreibernetz über das Zugangnetz anfordert.

Falls mindestens einer der Nutzer nicht in dem Kundennetz, aber in einem Mobilfunknetz angemeldet ist, können zusätzliche Ressourcen dem Mobilfunknetz aktiviert bzw. bereitgestellt werden. Dies sollte aber nur dann geschehen, wenn dies durch die Kommunikations- oder Dienstanforderung auch tatsächlich benötigt wird.

Die Erfindung stellt ferner ein Verfahren und ein System zur dynamischen Steuerung von Netzressourcen in einem Datennetz bereit. Das Verfahren umfasst das lastadaptive Schalten und/oder Umlenken von Netzkapazität in allen Netzabschnitten eines Datennetzes, insbesondere des Kernnetzes, auf der Basis der momentan bestehenden Kapazitätssituation. Die Kapazitätssituation wird unter Berücksichung zugeordneter und/oder freigegebener Zugangsporte mindestens eines Kundennetzes und/oder unter Berücksichtung der in mindestens einem Mobilfunknetz angemeldeten Nutzer, die nicht in dem mindestens einen Kundennetz angemeldet sind, bestimmt. Vorzugsweise werden die Zugangsporte nach dem erfindungsgemäßen Verfahren zugeordnet und/oder freigegeben.

Die jeweiligen Zustände des Zugangsnetzressourcenpools, die beispielsweise beschreiben, welches Kundennetz gerade welchem Zugangsport zugeordnet ist, sollen vorzugsweise in einer zentralen Netzspeicherinstanz ("Cloud") gespeichert werden, insbesondere um etwaige Entstörprozesse zu vereinfachen bzw. zu erleichtern.

Im Folgenden wird die Erfindung unter Bezugnahme auf die Figuren näher beschrieben, wobei
Fig. 1 schematisch das Prinzip des Netzaufbaus entsprechend dem Stand der Technik,
Fig. 2 den Netzaufbau nach dem Grundprinzip der erfindungsgemäßen Lösung,
Fig. 3 den Netzaufbau gemäß der Erfindung mit Virtualisierung von Basis-Diensten und
Fig. 4 den Netzaufbau gemäß der Erfindung mit Virtualisierung von Heimnetzkomponenten zeigt.

Das Verfahren und die Anordnung entsprechend der vorliegenden Erfindung gestattet es, Ports im Zugangsnetz dynamisch zu vergeben, Kommunikationswege und Dienste bei Bedarf vom Fest- auf den Funknetzanschluss umzulenken und Geräte und Komponenten des Kundennetzes entsprechend der An- und Abwesenheit von potenziellen Nutzern ereignisbasiert zu steuern.

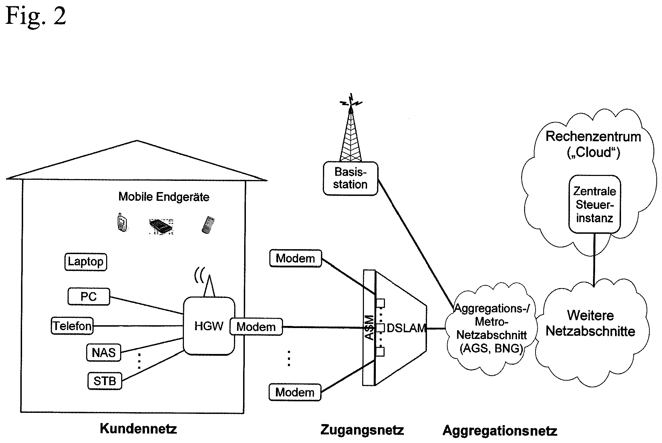

Fig. 2 zeigt die Anordnung und das zu Grunde liegende Prinzip: Ausgangspunkt ist der Zustand, dass die Nutzer sich im Haus aufhalten, ihre Mobiltelefone sich im Haus befinden und das Heimnetz in Betrieb ist. Verlassen nun nach und nach die Nutzer das Haus, wird dieses anhand der Position des jeweiligen Mobiltelefons festgestellt (z. B. über GPS-Positionierung oder Mobilfunkpositionierung oder durch den Einsatz von Bewegungssensoren im Haus) und über das Mobilfunknetz wird die aktuelle Position jedes Mobilgeräts (bzw. das Festnetz bei immobilen Sensoren im Haus) an die zentrale Steuerinstanz (ZSI) signalisiert. Diese befindet sich hier beispielhaft in einem Rechenzentrum oder der "Cloud".

Stellt die ZSI nun fest, dass alle (bzw. der letzte) Nutzer das Haus verlassen haben, so beginnt sie in einem ersten Schritt, das Kundennetz und die zugeordnete Zugangsleitung in den dafür vorgesehenen Zustand zu versetzen. Dazu werden über die Zugangsleitung zunächst alle Heimnetzkomponenten geordnet abgeschaltet bzw. in einen vordefinierten Ruhezustand versetzt. Dabei ist vom Nutzer (vorher) programmierbar, welche Geräte in welchen Ruhezustand versetzt werden sollen (z. B. Standby, Deep Sleep), um es z. B. zu ermöglichen, das Komponenten, die nicht abgeschaltet werden sollen, in einem betriebsfähigen Zustand verbleiben. Dieses Schalten der Heimnetzkomponenten geschieht über den "normalen" Kommunikationskanal, also die Zugangsleitung, wobei die Anwendung zur Steuerung und Koordination dieser Aktivität, die ZSI, im Rechenzentrum residiert.

In einem zweiten Schritt wird nun die Zugangsleitung bzw. genauer der Zugangsport (z. B. am DSLAM) "zurückgegeben": Es wird die Information, dass alle Nutzer aus dem Haus sind und die Komponenten des Kundennetzes geordnet in einen Ruhezustand versetzt wurde, von der ZSI aus an den DSLAM und insbesondere die dort installierte automatische Schaltmatrix (ASM; auch automatischer Schaltverteiler, Loop Management System (LSM)) signalisiert. Die ASM ist eine Einrichtung, die Zugangsleitungen flexibel und elektronisch gesteuert auf DSLAM-Ports schalten kann. Dadurch ist die starre Zuordnung von DSLAM-Port und Zugangsleitung (resp. Wohnungsanschluss) aufgehoben. Die ASM kann elektromechanisch als Koordinatenschalter realisiert sein oder auch elektronisch auf z. B. FPGA-Basis (field-programmable gate array). Der freigegebene DSLAM-Port "wandert" in den Pool kann nun für eine andere Zugangsleitung genutzt werden und wenn der ursprüngliche "Besitzer" des DSLAM-Ports wieder in sein Haus zurückkehrt, wird ihm flexibel ebenfalls ein neuer, im Allgemeinen aber anderer DSLAM-Port aus dem freien Pool zugeordnet. Die Rufnummern, kundenspezifischen Porteinstellungen und Kommunikationsbeziehungen bleiben jedoch bestehen und variieren nicht durch diese dynamisch-flexible Zuteilung der Netzressource(n). Um die Wartung und ggf. Fehlerbehebung in der ASM zu erleichtern, können die jeweiligen Zustände der ASM ebenfalls durch die ZSI in der "Cloud", also auf einem zentralen Speicherplatz z. B. in einem Rechenzentrum, gespeichert werden.

Zudem kann die Information, dass alle Nutzer aus dem Haus sind, dazu genutzt werden, alle bzw. voreingestellte eingehende Kommunikationsanforderungen auf ein vorbestimmtes Mobilgerät umzuleiten, bzw., bei mehreren zum Haushalt gehörigen Nutzern, auf mehrere vordefinierte und eindeutig bestimmte Nutzer (z. B. anhand der Zuordnung von Mobiltelefonnummern und E-Mail-Adressen). Es kann z. B. voreingestellt werden, dass Telefonanrufe direkt umgeleitet werden, E-Mail-Nachrichten mit großen Anhängen jedoch nicht. Denkbar sind weitere Services des Netzes, insbesondere aus der Cloud, wie z.B. Anrufbeantworter im Netz oder Faxempfang im Netz. Dies dient der Erhöhung der Servicequalität und der verbesserten Erfahrung des Nutzers.

In einem dritten Schritt wird im nun ggf. mehr belasteten Mobilfunknetz - in den Zellen, wo sich die jeweiligen Mobilfunkgeräte nun befinden - wenn nötig zusätzliche Kapazität aktiviert und bereitgestellt, um den zum Teil umgeleiteten Kommunikationsanforderungen gerecht werden zu können. Allgemeiner kann in diesem dritten Schritt Netzkapazität in allen beteiligten Netzabschnitten dynamisch geschaltet bzw. umgelenkt werden: So kann im Aggregationsnetz und z. B. auch im Kernnetz Kapazität umgelenkt werden auf der Basis der Informationen der ZSI - wenn die zuvor bestehende Kapazitätssituation dies erfordert. Diese dynamische Ressourcenzuteilung hinsichtlich der Kapazität im gesamten Netz entspricht einem - zumindest in Teilen - lastadaptiven Betrieb. Dadurch kann gegenüber dem herkömmlichen Netzbetrieb, bei dem Kapazität statisch und nicht entsprechend dem zeitlich fluktuierenden Verkehrsbedarf zugeteilt wird, unter anderem die Energieeffizienz verbessert werden.

Kehrt nun der erste Nutzer wieder in das Haus zurück, so wird dieses über die Positionierung des jeweiligen Mobilgerätes und das Mobilfunknetz an die ZSI signalisiert und der oben beschriebene Prozess wird umgekehrt durchlaufen:
Zunächst wird dem Anschluss wieder über die ASM ein DSLAM-Port zugeteilt, der im Allgemeinen ein anderer ist, als der zuvor zugeordnete. Dann werden die voreingestellten Heimnetzkomponenten wieder in einen vorher bestimmten aktiven Betriebszustand versetzt und die zugeordneten Kommunikationsbeziehungen wieder ins Heimnetz zurückumgeleitet.

Durch die vorliegende Erfindung kann das Netz ressourcenschonend errichtet und genutzt werden. Vorteile gegenüber der herkömmlichen Netzgestaltung und dem gegenwärtigen Betrieb sind:
- Die DSL-Ports werden dynamisch zugeteilt, wenn sie benötigt werden. Damit können im Mittel weniger Ports (und damit DSLAMs) im Netz installiert werden, als Zugangsleitungen zur Anbindung aller Kundenanschlüsse notwendig sind, denn es können Gleichzeitigkeitseffekte ausgenutzt werden, da nicht alle Kunden immer gleichzeitig aktiv sind. Die Ports werden aus einem Pool freigegeben. Dies spart Investitionskosten beim Aufbau des Netzes.
- Es sind insgesamt weniger DSL-Ports zu betreiben. Diese erfordern daher weniger Wartung und Energie gegenüber bekannten Netzdesign und -betrieb, so dass Betriebskosten gespart werden können.
- Netzressourcen, wie Kapazität, IP-Adressen, und somit Ports, können dynamisch zugeteilt werden und es können die angesprochenen Gleichzeitigkeitseffekte auch hier gewinnbringend ausgenutzt werden.
- Durch die automatisierte Steuerung des Kundennetzes und seiner Komponenten kann ein in volkswirtschaftlicher Sicht signifikanter Betrag an Energie gegenüber herkömmlichem Betrieb gespart werden.

### Ausführungsbeispiel 1: Virtualisierung von Basis-Diensten

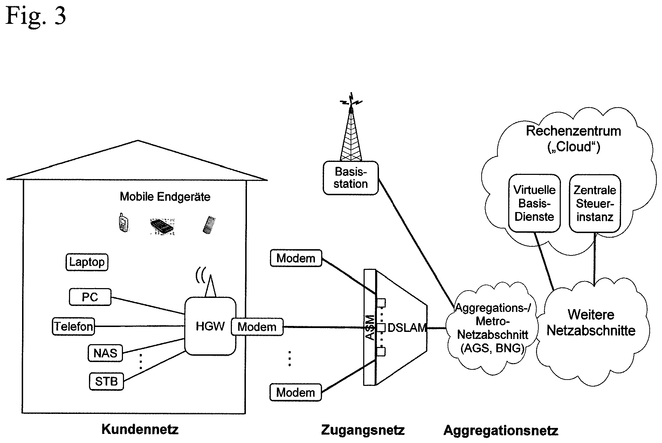

Fig. 3 zeigt ein Ausführungsbeispiel der vorliegenden Erfindung für die Basisdienste, die als virtuelle Instanz in der "Cloud" realisiert werden. Wenn der Nutzer nicht zu Hause ist und die Netzressourcen (z.B. DSLAM-Port) in den "Pool" zurückgegeben sind, ist die Konnektivität zum Home Gateway/Modem des Nutzers nicht mehr gegeben. Es ist aber sicherzustellen, dass die Basisfunktionalitäten wie Telefon und Faxempfang weiterhin zur Verfügung gestellt werden können. Für abgehende Telefonate und Faxe lässt sich das über das Mobilfunkgerät (Handy, Smartphone) realisieren. Für ankommende Telefonate und Faxe ist im Rechenzentrum für jeden Nutzer individuell eine Anwendung installiert, die entweder die Telefonate auf das Mobilfunkendgerät umleitet oder aber auf einen virtuellen Anrufbeantworter umleitet.

Die gespeicherten Anrufe werden, wenn das Heimnetz wieder, aktiv ist und der Nutzer zu Hause ist, auf die entsprechenden Geräte in der Heimnetzumgebung synchronisiert. Dies kann beispielsweise durch die Anzeige/Signalisierung im Telefon, "Anruf" vom Anrufbeantworter im Netz, erfolgen.

### Ausführungsbeispiel 2: Virtualisierung von Heimnetzkomponenten

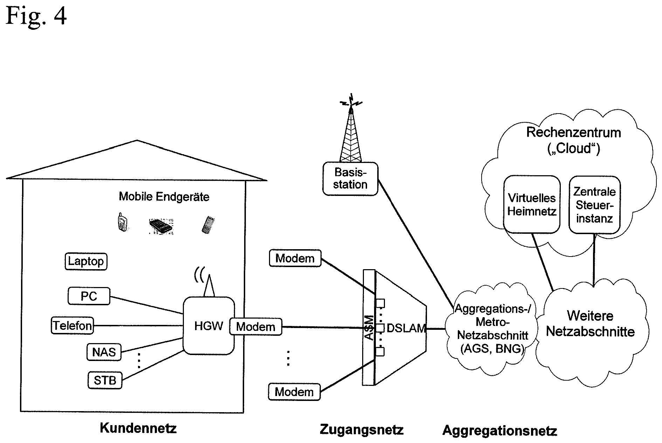

Die Virtualisierung von Heimnetzkomponenten gemäß Fig. 4 ist ein weiteres Ausführungsbeispiel entsprechend der vorliegenden Erfindung, bei dem zusätzlich zum beschriebenen Grundprinzip Teile des Heimnetzes virtualisiert werden: Das heißt, dass z. B. in dem Fall, dass der Nutzer nicht zu Hause ist und damit das Heimnetz im Ruhezustand ist, im Rechenzentrum (in der "Cloud") ein entsprechender Teil Kapazität für Speicherung und Verarbeitung über eine bestimmte Zeit allokiert und dem Nutzer zur Verfügung gestellt wird. Hier kann der Nutzer z. B. gewohnte PC-Anwendungen nutzen; die Daten werden später - wenn das Heimnetz wieder aktiv ist - mit dem PC synchronisiert, so dass eine konsistente Dokumenten- und Datenbasis vorliegt. Ein weiteres Beispiel für die Nutzung virtualisierter Heimnetzkomponenten ist eine virtuelle STB in der "Cloud", die es gestattet, dass vorprogrammierte Fernsehsendungen aufgezeichnet werden können, auch wenn die STB des Heimnetzes im Ruhezustand ist, weil niemand mehr im Haus ist. Bei Wiedereinschaltung des Heimnetzes werden die aufgezeichneten Sendungen dann auf die STB des Heimnetzes übertragen.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang der folgenden Ansprüche zu verlassen.

Die Erfindung umfasst ebenfalls einzelne Merkmale in den Figuren auch wenn sie dort im Zusammenhang mit anderen Merkmalen gezeigt sind und/oder vorstehend nicht genannt sind, ohne den Umfang der folgenden Ansprüche zu verlassen.

## Patentansprüche

1. Verfahren zur dynamischen Zuteilung von Netzressourcen im Zugangsnetz und in mindestens einem Kundennetz mit den Schritten, vorzugsweise in folgender Reihenfolge:
Festellen der Positionen aller Nutzer mindestens eines Kundennetzes;
**gekennzeichnet durch**
Versetzen des mindestens einen Kundennetzes und/oder mindestens einer seiner Komponenten in einen ersten vordefinierten Zustand, falls festgestellt wird, dass kein Nutzer des mindestens einen Kundennetzes in dem mindestens einen Kundennetz angemeldet ist; und
Freigeben mindestens eines Zugangsports eines dem mindestens einen Kundennetz zugeordneten Zugangsmultiplexers an den Zugangsnetzressourcenpool, falls festgestellt wird, dass kein Nutzer des mindestens einen Kundennetzes in dem mindestens einem Kundennetz angemeldet ist.

2. Verfahren nach Anspruch 1, ferner mit den Schritten:
Zuordnen mindestens eines Zugangsports dem mindestens einen Kundennetz, falls festgestellt wird, dass mindestens ein Nutzer des mindestens einen Kundennetzes in der Reichweite des Kundennetzes ist; und
Versetzen des mindestens einen Kundennetzes und/oder mindestens einer seiner Komponenten in einen zweiten vordefinierten Zustand, falls festgestellt wird, dass mindestens ein Nutzer des mindestens einen Kundennetzes in der Reichweite des Kundennetzes ist.

3. Verfahren nach Anspruch 1 oder 2, ferner mit dem Schritt:
Umstellen mindestens einer voreingestellten eingehenden oder ausgehenden Kommunikationsanforderung und/oder mindestens einer Dienstanforderung mindestens eines Nutzers des mindestens einen Kundennetzes auf mindestens ein mobiles Kommunikationsgerät des Nutzers, falls der Nutzer nicht in dem mindestens einen Kundennetz angemeldet ist.

4. Verfahren nach einem der Ansprüche 1 bis 3, ferner mit dem Schritt:
Umstellen mindestens einer voreingestellten eingehenden oder ausgehenden Kommunikationsanforderung und/oder mindestens einer Dienstanforderung mindestens eines Nutzers des mindestens einen Kundennetzes auf mindestens eine virtuelle Instanz, falls der Nutzer nicht in dem mindestens einen Kundennetz angemeldet ist.

5. Verfahren nach einem der Ansprüche 1 bis 4, ferner mit dem Schritt:
Zuordnen des mindestens einen freigegebenen Zugangsports des mindestens einen Kundennetzes an mindestens ein weiteres Kundennetz.

6. Verfahren nach einem der Ansprüche 1 bis 5, ferner mit dem Schritt:
Aktivieren und/oder Bereitstellen zusätzlicher Ressourcen in mindestens einem Mobilfunknetz, falls mindestens einer der Nutzer nicht in dem mindestens einen Kundennetz angemeldet, aber in dem mindestens einem Mobilfunknetz angemeldet ist.

7. Verfahren zur dynamischen Steuerung von Netzressourcen in einem Datennetz, mit dem Schritt:
Lastadaptives Schalten und/oder Umlenken von Netzkapazität in allen Netzabschnitten eines Datennetzes, insbesondere dem Kernnetz auf Basis der momentan bestehenden Kapazitätssituation,
wobei die Kapazitätssituation bestimmt wird unter Berücksichung zugeordneter und/oder freigegebener Zugangsporte mindestens eines Kundennetzes und/oder unter Berücksichtung der in mindestens einem Mobilfunknetz angemeldeten Nutzer, die nicht in dem mindestens einen Kundennetz angemeldet sind,
wobei die Zugangsporte nach einem der vorstehenden Verfahren zugeordnet und/oder freigegeben werden.

8. System zur dynamischen Zuteilung von Netzressourcen im Zugangsnetz und in mindestens einem Kundennetz mit:
einer Vorrichtung zum Feststellen der Positionen aller Nutzer mindestens eines Kundennetzes;
**gekennzeichnet durch**
eine Vorrichtung zum Versetzen des mindestens einen Kundennetzes und/oder mindestens einer seiner Komponenten in einen ersten vordefinierten Zustand, falls festgestellt wird, dass kein Nutzer des mindestens einen Kundennetzes in dem mindestens einem Kundennetz angemeldet ist; und
eine Vorrichtung zum Freigeben mindestens eines Zugangsports eines dem mindestens einen Kundennetz zugeordneten Zugangsmultiplexers an das Zugangsnetz, falls festgestellt wird, dass kein Nutzer des mindestens einem Kundennetzes in dem mindestens einen Kundennetz angemeldet ist.

9. System nach Anspruch 8, ferner mit:
einer Vorrichtung zum Zuordnen mindestens eines Zugangsports dem mindestens einem Kundennetz, falls festgestellt wird, dass mindestens ein Nutzer des mindestens einen Kundennetzes in der Reichweite des Kundennetzes ist; und
einer Vorrichtung zum Versetzen des mindestens einen Kundennetzes und/oder mindestens einer seiner Komponenten in einen zweiten vordefinierten Zustand, falls festgestellt wird, dass mindestens ein Nutzer des mindestens einen Kundennetzes in der Reichweite des Kundennetzes ist.

10. System nach Anspruch 8 oder 9, ferner mit:
einer Vorrichtung zum Umstellen mindestens einer voreingestellten eingehenden oder ausgehenden Kommunikationsanforderung und/oder mindestens einer Dienstanforderung mindestens eines Nutzers des mindestens einen Kundennetzes auf mindestens ein mobiles Kommunikationsgerät des Nutzers, falls der Nutzer nicht in dem mindestens einen Kundennetz angemeldet ist.

11. System nach einem der Ansprüche 8 bis 10, ferner mit:
einer Vorrichtung zum Umstellen mindestens einer voreingestellten eingehenden oder ausgehenden Kommunikationsanforderung und/oder mindestens einer Dienstanforderung mindestens eines Nutzers des mindestens einem Kundennetzes auf mindestens eine virtuelle Instanz, falls der Nutzer nicht in dem mindestens einem Kundennetz angemeldet ist.

12. System nach einem der Ansprüche 8 bis 11, ferner mit:
einer Einrichtung zum Zuordnen des mindestens einen freigegebenen Zugangsports des mindestens einen Kundennetzes an mindestens ein weiteres Kundennetz.

13. System nach einem der Ansprüche 8 bis 12, ferner mit:
einer Einrichtung zum Aktivieren und/oder Bereitstellen zusätzlicher Ressourcen in mindestens einem Mobilfunknetz, falls mindestens einer der Nutzer nicht in dem mindestens einem Kundennetz angemeldet, aber in dem mindestens einem Mobilfunknetz angemeldet ist.

14. System zur dynamischen Steuerung von Netzressourcen in einem Datennetz, mit:
einer Einrichtung zum lastadaptiven Schalten und/oder Umlenken von Netzkapazität in allen Netzabschnitten eines Datennetzes, insbesondere dem Kernnetz auf Basis der momentan bestehenden Kapazitätssituation,
wobei das System eingerichtet ist, die Kapazitätssituation unter Berücksichung zugeordneter und/oder freigegebener Zugangsporte mindestens eines Kundennetzes und/oder
unter Berücksichtung der in mindestens einem Mobilfunknetz angemeldeten Nutzer zu bestimmen, die nicht in dem mindestens einem Kundennetz angemeldet sind, und die Zugangsporte nach einem der vorstehenden Verfahren zuzuordnen und/oder freizugeben.

15. Computerprogramm-Produkt zum Speichern ausführbaren Codes für ein Verfahren nach einem der Ansprüche 1 bis 7.

## Claims

1. Method of dynamically allocating network resources in the access network and in at least one customer network, comprising the steps, preferably in the following order:
determining the positions of all users of at least one customer network;
**characterized by**
bringing the at least one customer network and/or at least one of its components in a first predefined state, if it is determined that no user of the at least one customer network is registered in the at least one customer network; and
releasing at least one access port of an access multiplexer assigned to the at least one customer network to the access network resource pool, if it is determined that no user of the at least one customer network is registered in the at least one customer network.

2. Method of claim 1, further comprising the following steps:
allocating at least one access port to the at least one customer network, if it is determined that at least one user of the at least one customer network is within reach of the customer network; and
bringing the at least one customer network and/or at least one of its components into a second predefined state, if it is determined that at least one user of the at least one customer network is within reach of the customer network.

3. Method of claim 1 or 2, further comprising the step of:
transferring at least one preset incoming or outgoing communication request and/or at least one service request of at least one user of the at least one customer network to at least one mobile communication device of the user, if the user is not registered in the at least one customer network.

4. Method according to any of claims 1 to 3, further comprising the step of:
transferring at least one preset incoming or outgoing communication request and/or at least one service request of at least one user of the at least one customer network to at least one virtual instance, if the user is not registered in the at least one customer network.

5. Method according to any of claims 1 to 4, further comprising the step of:
allocating the at least one released access port of the at least one customer network to at least one further customer network.

6. Method according to any of claims 1 to 5, further comprising the step of:
activating and/or providing additional resources in at least one mobile radio network, if at least one of the users is not registered in the at least one customer network, but registered in the at least one mobile radio network.

7. Method of dynamically controlling network resources in a data network, comprising the step of:
load adaptive switching and/or redirecting network capacity in all network sections of a data network, in particular the core network, on the basis of the currently available capacity,
wherein the available capacity is determined considering allocated and/or released access ports of at least one customer network and/or considering the users registered in the at least one mobile radio network, but not registered in the at least one customer network,
wherein the access ports are allocated and/or released according to any of the preceding methods.

8. System for dynamically allocating net resources in the access network and at least one customer network, comprising:
a device for determining the positions of all users of at least one customer network; **characterized by**
a device for bringing the at least one customer network and/or at least one of its components into a first predefined state, if it is determined that no user of the at least one customer network is registered in the at least one customer network; and
a device for releasing at least one access port of an access multiplexer assigned to the at least one customer network to the access network, if it is determined that no user of the at least one customer network is registered in the at least one customer network.

9. System of claim 8, further comprising:
a device for allocating at least one access port to the at least one customer network, if it is determined that at least one user of the at least one customer network is within reach of the customer network; and
a device for bringing the at least one customer network and/or at least one of its components into a second predefined state, if it is determined that at least one user of the at least one customer network is within reach of the customer network.

10. System of claim 8 or 9, further comprising:
a device for transferring at least one preset incoming or outgoing communication request and/or at least one service request of at least one user of the at least one customer network to at least one mobile communication device of the user, if the user is not checked in to the at least one customer network.

11. System according to any of claims 8 to 10, further comprising:
a device for transferring at least one preset incoming or outgoing communication request and/or at least one service request of at least one user of the at least one customer network to at least one virtual instance, if the user is not registered in the at least one customer network.

12. System according to any of claims 8 to 11, further comprising:
means for allocating the at least one released access ports of the at least one customer network to at least one further customer network.

13. System according to any of claims 8 to 12, further comprising:
means for activating and/or providing additional resources in at least one mobile radio network, if at least one of the users is not registered in at least one customer network, but registered in at least one mobile radio network.

14. System for dynamically controlling network resources in a data network, comprising:
means for the load-adaptive switching and/or redirecting network capacity in all network sections of a data network, in particular the core network, on the basis of the currently available capacity,
wherein the system is adapted to determine the available capacity considering allocated and/or released access ports of at least one customer network and/or considering the users registered in at least one mobile radio network, but not registered in at least one customer network, and
to allocate and/or release the access ports according to any of the preceding methods.

15. Computer program product for storing executable code for a method according to any of claims 1 to 7.

## Revendications

1. Procédé de répartition dynamique de ressources réseau dans le réseau d'accès et dans au moins un réseau client comprenant les étapes suivantes, préférentiellement dans l'ordre ci-dessous :
établissement des positions de tous les utilisateur d'au moins un réseau client ;
**caractérisé par**
le passage dudit au moins un réseau client et/ou d'au moins un de ses composants vers un premier état défini, s'il est établi qu'aucun utilisateur dudit au moins un réseau client n'est enregistré dans ledit au moins un réseau client ; et
libération d'au moins un port d'accès d'un multiplexeur d'accès affecté audit au moins un réseau client sur le groupement de ressources de réseau d'accès, s'il est établi qu'aucun utilisateur dudit au moins un réseau client n'est enregistré dans ledit au moins un réseau client.

2. Procédé selon la revendication 1, comprenant en outre les étapes suivantes :
affectation d'au moins un port d'accès audit au moins un réseau client, s'il est établi qu'au moins un utilisateur dudit au moins un réseau client se trouve dans le champ de portée du réseau client ; et
passage dudit au moins un réseau client et/ou d'au moins un de ses composants vers un deuxième état défini, s'il est établi qu'au moins un utilisateur dudit au moins un réseau client se trouve dans le champ de portée du réseau client.

3. Procédé selon la revendication 1 ou la revendication 2, comprenant en outre l'étape suivante :
transfert d'au moins une requête de communication et/ou d'au moins une requête de service prédéfinie entrante ou sortante d'au moins un utilisateur dudit au moins un réseau client vers au moins un appareil de communication mobile de l'utilisateur, si l'utilisateur n'est pas enregistré dans ledit au moins un réseau client.

4. Procédé selon l'une des revendications 1 à 3, comprenant en outre l'étape suivante :
transfert d'au moins une requête de communication et/ou d'au moins une requête de service prédéfinie entrante ou sortante d'au moins un utilisateur dudit au moins un réseau client vers au moins une instance virtuelle si l'utilisateur n'est pas enregistré dans ledit au moins un réseau client.

5. Procédé selon l'une des revendications 1 à 4, comprenant en outre l'étape suivante :
affectation dudit au moins un port d'accès libéré dudit au moins un réseau client à au moins un autre réseau client.

6. Procédé selon l'une des revendications 1 à 5, comprenant en outre l'étape suivante :
activation et/ou fourniture de ressources complémentaires dans au moins un réseau de téléphonie mobile, si au moins un des utilisateurs n'est pas enregistré dans ledit au moins un réseau client, mais est enregistré dans ledit au moins un réseau de téléphonie mobile.

7. Procédé pour la commande dynamique de ressources réseau dans un réseau de données, comprenant l'étape suivante :
commutation et/ou réorientation en fonction de la charge d'une capacité de réseau dans tous les segments d'un réseau de données, en particulier dans le réseau central sur la base de l'état de capacité momentanément présenté,
l'état de capacité étant déterminé en tenant compte de ports d'accès affectés et/ou libérés d'au moins un réseau client et/ou en tenant compte des utilisateurs enregistrés dans au moins un réseau de téléphonie mobile, qui ne sont pas enregistré dans ledit au moins un réseau client,
les ports d'accès étant affectés et/ou libérés suivant un des procédés précédents.

8. Système pour la répartition dynamique de ressources réseau dans le réseau d'accès et dans au moins un réseau client, avec :
un dispositif pour l'établissement des positions de tous les utilisateurs d'au moins un réseau client ;
**caractérisé par**
un dispositif pour le passage dudit au moins un réseau client et/ou d'au moins un de ses composants vers un premier état défini, s'il est établi qu'aucun utilisateur dudit au moins un réseau client n'est enregistré dans ledit au moins un réseau client ; et
un dispositif pour la libération d'au moins un port d'accès d'un multiplexeur d'accès affecté audit au moins un réseau client sur le réseau d'accès, s'il est établi qu'aucun utilisateur dudit au moins un réseau client n'est enregistré dans ledit au moins un réseau client.

9. Système selon la revendication 8, comprenant en outre :
un dispositif pour l'affectation d'au moins un port d'accès audit au moins un réseau client, s'il est établi qu'au moins un utilisateur dudit au moins un réseau client se trouve dans le champ de portée du réseau client ; et
un dispositif pour le passage dudit au moins un réseau client et/ou d'au moins un de ses composants vers un deuxième état défini, s'il est établi qu'au moins un utilisateur dudit au moins un réseau client se trouve dans le champ de portée du réseau client.

10. Système selon la revendication 8 ou la revendication 9, comprenant en outre :
un dispositif pour le transfert d'au moins une requête de communication et/ou d'au moins une requête de service prédéfinie entrante ou sortante d'au moins un utilisateur dudit au moins un réseau client vers au moins un appareil de communication mobile de l'utilisateur, si l'utilisateur n'est pas enregistré dans ledit au moins un réseau client.

11. Système selon l'une des revendications 8 à 10, comprenant en outre :
un dispositif pour le transfert d'au moins une requête de communication et/ou d'au moins une requête de service prédéfinie entrante ou sortante d'au moins un utilisateur dudit au moins un réseau client vers au moins une instance virtuelle si l'utilisateur n'est pas enregistré dans ledit au moins un réseau client.

12. Système selon l'une des revendications 8 à 11, comprenant en outre :
un dispositif pour l'affectation dudit au moins un port d'accès libéré dudit au moins un réseau client à au moins un autre réseau client.

13. Système selon l'une des revendications 8 à 12, comprenant en outre :
un dispositif pour l'activation et/ou la fourniture de ressources complémentaires dans au moins un réseau de téléphonie mobile, si au moins un des utilisateurs n'est pas enregistré dans ledit au moins un réseau client, mais est enregistré dans ledit au moins un réseau de téléphonie mobile.

14. Système pour la commande dynamique de ressources réseau dans un réseau de données, avec :
un dispositif pour la commutation et/ou la réorientation en fonction de la charge d'une capacité de réseau dans tous les segments d'un réseau de données, en particulier dans le réseau central sur la base de l'état de capacité momentanément présenté,
ledit système étant prévu pour déterminer l'état de capacité en tenant compte de ports d'accès affectés et/ou libérés d'au moins un réseau client et/ou en tenant compte des utilisateurs enregistrés dans au moins un réseau de téléphonie mobile, qui ne sont pas enregistré dans ledit au moins un réseau client, et pour affecter et/ou libérer les ports d'accès suivant un des procédés précédents.

15. Produit de programme informatique pour la mémorisation de codes exécutables pour un procédé selon l'une des revendications 1 à 7.
